# EUROPÄISCHE PATENTSCHRIFT

(11) **EP 1 070 732 B1**
(45) Veröffentlichungstag und Bekanntmachung des Hinweises auf die Patenterteilung: **09.03.2005**
(21) Anmeldenummer: 00115593.6
(22) Anmeldetag: 19.07.2000
(51) Int. Cl.: C08G 18/08, C08L 75/04, C09D 175/04

(54) **Wässrige Dispersion einer Mischung eines Polyurethans mit einem strahlungshärtbaren (Meth)acrylat-Präpolymer**
Aqueous dispersion of a mixture of polyurethane with radiation-curable (meth)acrylate-prepolymer
Dispersion aqueuse d'un mélange de polyuréthane et de prépolymère de (méth)acrylate durcissable par irradiation

(30) Priorität: 20.07.1999 DE 19933826
(43) Veröffentlichungstag der Anmeldung: 24.01.2001
(73) Patentinhaber: BASF AKTIENGESELLSCHAFT, 67056 Ludwigshafen (DE)
(72) Erfinder: Paulus, Wolfgang, 55270 Ober-Olm (DE); Reich, Wolfgang, 67133 Maxdorf (DE); Lokai, Matthias, 67677 Enkenbach-Alsenborn (DE); Jaworek, Thomas, 67169 Kallstadt (DE)
(74) Vertreter: Kinzebach, Werner, Dr.

(56) Entgegenhaltungen:
- EP-A- 0 480 251
- EP-A- 0 849 300

## Beschreibung

Die Erfindung betrifft wässrige Dispersionen, die hydrophile Gruppen enthaltende Polyurethane sowie begrenzt wasserverdünnbare strahlungshärtbare (Meth)acrylat-Präpolymere enthalten, sowie Verfahren zu deren Herstellung und Verwendung zum Beschichten von Substraten.

Es ist bekannt, wässrige Dispersionen von strahlungshärtbaren Harzen für das Beschichten oder Imprägnieren von Substraten zu verwenden. So wird in der DE-C 4413619 als bekannt angegeben, bei der Herstellung sogenannter Finishfolien durch Lackieren von imprägnierten bzw. beschichteten Substraten (als spaltfestes Papier bezeichnet) für das Beschichten der Substrate Mischungen von Acrylatdispersionen und Melamin- und/oder Harnstoffharzen zu verwenden. Die DE-C 4413619 schlägt vor, für das Beschichten solcher Substrate mit Elektronenstrahlen härtbare wasserverdünnbare bzw. wasserlösliche Acrylate in Form einer Dispersion, Emulsion oder Lösung zu verwenden, denen vorzugsweise Melamin- und/oder Harnstoffharze zugemischt wurden. Nähere Angaben zu den Acrylaten fehlen in der DE-C 4413619, ebenso Ausführungsbeispiele. Als Substrate sind solche aus Papier, Polyethylenterephthalat, Polyolefinen und Polyvinylchlorid genannt. Das behandelte Substrat wird nach dem Abdunsten des Wasseranteils und ggf. nachfolgendem Lackieren mit Elektronenstrahlen gehärtet. In der DE-C 4413619 wird angestrebt, im Herstellungsverfahren weniger Wasseranteile behandeln zu müssen und die Trocknungskapazität zu reduzieren.

Wässrige Dispersionen von Mischungen aus Polyurethanen mit hydrophilen Gruppen und strahlungshärtbaren Acrylatharzen, d.h. Acrylatpräpolymeren für die Beschichtung von Substraten sind bekannt. Es sei dabei insbesondere auf die DE-A 19716020 der Anmelderin verwiesen. In der DE-A 19716020 sind wässrige Dispersionen beschrieben, die in dispergierter Form enthalten (a) ein Polyurethan, das zum Erzielen einer Wasserdispergierbarkeit hydrophile Gruppen oder potentiell hydrophile Gruppen aufweist, jedoch keine C-C-Doppelbindungen enthält, sowie (b) ein nichtselbstdispergierbares strahlungshärtbares Präpolymer mit einem Gehalt von 0,1 bis 1 mol polymerisierbare Doppelbindungen pro 100 g Präpolymer. Die in der DE-A 19716020 beschriebenen wässrigen Dispersionen von Mischungen aus Polyurethanen und (Meth)acrylat-Präpolymeren sind zwar lagerstabil und zeigen beim Holzbeschichten nach der UV-Härtung eine hinreichende Härte, Haftung und Chemikalienbeständigkeit, eignen sich aber aufgrund ihres Penetrationsverhaltens nicht besonders für das Beschichten bzw. Imprägnieren von Papiersubstraten.

Der vorliegenden Erfindung lag die Aufgabe zugrunde, strahlungshärtbare Dispersionen zur Verfügung zu stellen, die neben einer hinreichenden Blockfestigkeit des getrockneten ungehärteten Films und einer guten Flexibilität des Films nach der Strahlungshärtung beim Beschichten von Papier ein verbessertes Penetrationsverhalten und eine höhere Polymeraufnahme in das Papier zeigen.

Es wurde nun gefunden, daß dies erreicht werden kann, wenn man in wässrigen Dispersionen von Mischungen von hydrophilen Polyurethanen (A) und Präpolymeren (B) solche strahlungshärtbaren (Meth)acrylat-Präpolymere verwendet oder mitverwendet, die begrenzt wasserverdünnbar sind. Vorzugsweise sollen die begrenzt wasserverdünnbaren (Meth)acrylat-Präpolymeren in den wässrigen Polyurethandispersionen sowohl in der Polyurethanphase als auch in der Wasserphase gelöst sein.

Gegenstand der vorliegenden Erfindung sind somit wässrige Dispersionen, die im wesentlichen frei von Schutzkolloiden und Emulgatoren sind und enthalten:
a) mindestens ein Polyurethan (A) mit hydrophilen Gruppen, die eine Wasserdispergierbarkeit des Polyurethans bewirken, wobei das Polyurethan (A) im wesentlichen frei ist von radikalisch polymerisierbaren C-C-Doppelbindungen, und
b) mindestens ein Präpolymer (B) mit einem Gehalt von 0,1 bis 1 mol radikalisch polymerisierbaren C-C-Doppelbindungen pro 100 g Präpolymer,
die dadurch gekennzeichnet sind, daß das strahlungshärtbare (Meth)acrylat-Präpolymer (B) eine Wasserverdünnbarkeit von mindestens 5 Gew.% Wasser, bezogen auf den Festanteil des (Meth)acrylat-Präpolymers (B), aufweist.

Kennzeichen der vorliegenden Erfindung ist somit, in den wässrigen Dispersionen von Mischungen von Polyurethanen (A) mit Präpolymeren (B) begrenzt wasserverdünnbare strahlungshärtbare (Meth)acrylat-Präpolymere (B), insbesondere solche mit hydrophilen Gruppen und bevorzugt Hydroxylgruppen zu verwenden. Bevorzugte begrenzt wasserverdünnbare (Meth)acrylat-Präpolymere (B) sind sowohl in den Phasen der Polyurethane (A) als auch in der Wasserphase der Dispersionen gelöst. Mit den erfindungsgemäß verwendeten Präpolymeren (B) wird ein verbessertes Penetrationsverhalten der wässrigen Dispersionen in den Papiersubstraten als auch eine höhere Spaltfestigkeit des imprägnierten Papiers erreicht.

Die (Meth)acrylat-Präpolymere (B) sollen eine begrenzte Wasserverdünnbarkeit aufweisen, wobei die Wasserverdünnbarkeit bestimmt wird, indem den (Meth)acrylat-Präpolymeren (B) sukzessive kleine Portionen definierter Wassermengen zugesetzt und eingemischt werden, bis das Auftreten einer permanenten Trübung das Erreichen der Wasserverdünnbarkeitsgrenze anzeigt. Als Grenze der Wasserverdünnbarkeit wird somit die maximal zusetzbare Menge Wasser bezeichnet, bei der noch keine permanente Trübung auftritt. Bei den erfindungsgemäß geeigneten (Meth)acrylat-Präpolymeren (B) sollen mindestens 0,05 Teile Wasser pro Teil (Meth)-acrylat-Präpolymer (B) noch homogene Wassermischungen geben, d.h. das (Meth)acrylat-Präpolymere soll mit mindestens 5, insbesondere 5 bis 100, bevorzugt 10 bis 100 und besonders bevorzugt 20 bis 50 Gew.% Wasser, bezogen auf den Festanteil des (Meth)acrylat-Präpolymeren (B), wasserverdünnbar sein. Dies kann erreicht werden durch Verwendung eines oder mehrerer (Meth)acrylat-Präpolymere, welche(s) die oben angegebene Wasserverdünnbarkeit per se aufweisen (aufweist). Alternativ kann man ein Gemisch verwenden, das die oben angegebene Wasserverdünnbarkeit aufweist, aber ein oder mehrere (Meth)acrylat-Präpolymere enthält, welche diese Wasserverdünnbarkeit für sich genommen nicht aufweisen. Beispielsweise kann ein derartiges Gemisch ein (oder mehrere) (Meth)acrylat-Präpolymer(e) der angegebenen Wasserverdünnbarkeit und ein (oder mehrere) (Meth)acrylat-Präpolymer(e) enthalten, dessen (deren) Wasserverdünnbarkeit nicht dem oben angegebenen Wert entspricht. Alternativ kann das Gemisch auch aus zwei oder mehreren (Meth)acrylat-Präpolymeren gebildet sein, die nur im Gemisch, nicht aber für sich genommen, die obige wasserverdünnbarkeit besitzen.

Von den in den Beispielen verwendeten handelsüblichen (Meth)acrylat-Präpolymeren hat das Produkt Laromer® LR 8982 eine Grenze der Wasserverdünnbarkeit von 20,4 Gew.% Wasser, das Produkt Laromer ® LR 8765 eine Grenze der Wasserverdünnbarkeit von 38,7 Gew.% Wasser, jeweils bezogen auf den Festanteil der (Meth)acrylat-Präpolymeren. Das Produkt Laromer® PO 43F hat eine Grenze der Wasserverdünnbarkeit von unter 3 Gew.% Wasser und ist als alleiniges (Meth)acrylat-Präpolymer nicht für die Herstellung der erfindungsgemäßen wässrigen Dispersionen geeignet. Jedoch kann es in Mischung mit einem anderen (Meth)acrylat-Präpolymer (B) verwendet werden, das eine Wasserverdünnbarkeit von mindestens 5 Gew.% aufweist. Mit den bevorzugt verwendeten (Meth)acrylat-Präpolymeren (B) wird erreicht, daß in den wässrigen Dispersionen die (Meth)acrylate (B) sowohl in der Polyurethanphase als auch in der Wasserphase der Dispersionen gelöst sind, worauf insbesondere bei einer Wasserverdünnbarkeit oberhalb von 100 Gew.% Wasser zu achten ist.

Unter strahlungshärtbaren (Meth)acrylat-Präpolymeren (B) versteht man die als strahlungshärtbare Acrylatharze bekannten Umsetzungsprodukte von (i) Methacrylsäure und/oder Acrylsäure mit (ii) mindestens 2 Hydroxylgruppen enthaltenden Polyestern, Polyethern, Polyurethanen oder Epoxidharze (die mindestens 2 mit (Meth)acrylsäure reagierende funktionelle Gruppen enthalten), sowie Umsetzungsprodukte von (i) Hydroxyalkyl(meth)acrylaten mit (ii) Isocyanatgruppen enthaltenden Verbindungen. Solche strahlungshärtbaren Acrylatharze sind handelsüblich und z.B. in P.K.T. Oldring, Chemistry & Technology of UV & EB Formulations for Coatings, Inks & Paints, Vol.II: Prepolymers & Reactive Diluents, J.Wiley and Sons, New York and Sita Technology Ltd., London 1997, beschrieben. Die (Meth)acrylat-Präpolymeren oder Acrylatharze werden je nach Herstellung und wiederkehrenden Struktureinheiten in der Molekülkette in Polyesteracrylate, Polyetheracrylate, Urethanacrylate, Epoxyacrylate und Melaminacrylate unterteilt und sind als strahlungshärtbare Präpolymere relativ niedermolekular. Sie haben im allgemeinen ein durchschnittliches Molekulargewicht Mₙ von 300 bis 15000 und bevorzugt von 400 bis 3000 g/mol, bestimmt durch Gelpermeationschromatographie (GPC) mit Polystyrol als Standard und Tetrahydrofuran als Elutionsmittel. Die (Meth)acrylat-Präpolymeren enthalten 0,1 bis 1,0 und bevorzugt 0,1 bis 0,5 mol an polymerisierbaren C-C-Doppelbindungen pro 100 g Präpolymer. Sehr geeignete (Meth)acrylat-Präpolymere enthalten 2 bis 20, insbesondere 2 bis 10 und bevorzugt 2 bis 6 Methacryloylund/oder Acryloylgruppen im Molekül. Von den (Meth)acrylat-Präpolymeren sind besonders solche geeignet, die sich von mehrfunktionellen aliphatischen Alkoholen ableiten, die neben den Hydroxylgruppen und ggf. Ether-, Ester- und/oder Urethangruppen keine weiteren funktionellen Gruppen aufweisen. Beispiele von Alkoholen sind z.B. di-, tri- und höherwertige Alkohole wie Propylenglykol, Diethylenglykol, Triethylenglykol, Butandiol, Hexandiol, Neopentylglykol, Cyclohexandiol, Glyzerin, Trimethylolpropan, Di-trimethylolpropan, Pentaerythrit, Di-pentaerythrit oder Sorbit. Zur Herstellung von Polyesteracrylaten kommen vorwiegend aliphatische Polyesterpolyole in Betracht. Polyesteracrylate können ein- oder mehrstufig aus Polyolen, Polycarbonsäuren und (Meth)acrylsäure hergestellt werden. Sie sind z.B. in der EP-A 279 303 beschrieben. Zur Herstellung der bevorzugten Polyetheracrylate eignen sich vor allem alkoxylierte, bevorzugt ethoxylierte mehrwertige Alkohole, worin der Alkoxylierungsgrad je Hydroxylgruppe 0 bis 10 betragen kann.

Bevorzugt sind Polyetheracrylate, die CH₂-CH₂-O-Struktureinheiten sowie zusätzlich freie hydrophile Gruppierungen und bevorzugt als solche Hydroxylgruppen enthalten, z.B. freie Hydroxylgruppen enthaltende Polyetheracrylate, die sich von ethoxyliertem Glyzerin ableiten.

Die erfindungsgemäßen wässrigen Dispersionen sind im wesentlichen frei von Schutzkolloiden und Emulgatoren und enthalten neben den strahlungshärtbaren (Meth)acrylat-Präpolymeren (B) Polyurethane (A) mit hydrophilen Gruppen, die dadurch wasserdispergierbar sind. Die Polyurethane (A) sind im wesentlichen frei von C-C-Doppelbindungen. Bezüglich der Art der Polyurethane, ihrer Herstellung und der Art der Herstellung der wässrigen Dispersionen der Polyurethane (A) und der (Meth)acrylat-Präpolymeren (B) sei ausdrücklich auf die entsprechenden Angaben in der DE-A 19716020 verwiesen, die als Teil der Angaben in der vorliegenden Patentanmeldung gelten sollen. Das Polyurethan (A) ist danach aufgebaut aus
a) Diisocyanaten mit 4 bis 30 C-Atomen,
b) Diolen, von denen
   b1) 10 bis 100 mol-%, bezogen auf die Gesamtmenge der Diole b), ein Molekulargewicht von 500 bis 5000 aufweisen, und
   b2) 0 bis 90 mol-%, bezogen auf die Gesamtmenge der Diole b), ein Molekulargewicht von 60 bis 500 g/mol aufweisen,
c) von den Verbindungen a) und b) unterschiedlichen Ausgangsstoffen mit mindestens einer Isocyanatgruppe oder mindestens einer gegenüber Isocyanatgruppen reaktiven Gruppe, die darüber hinaus mindestens eine hydrophile Gruppe oder potentiell hydrophile Gruppe tragen, die zu einer Wasserdispergierbarkeit der Polyurethane (A) beitragen,
d) ggf. weiteren von den Verbindungen a) bis c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt, und
e) ggf. von den Ausgangsstoffen a) bis d) verschiedenen einwertigen Verbindungen mit einer reaktiven Gruppe, bei der es sich um eine alkoholische Hydroxylgruppe, eine primäre oder sekundäre Aminogruppe oder eine Isocyanatgruppe handelt.

Bevorzugt beträgt dabei der Anteil der Diisocyanate a) an den Ausgangsstoffen a) bis e) 20 bis 70 Gew.%.

Beispiele geeigneter Diisocyanate a), Diole b) und Ausgangsstoffe c) und d) sind die in der DE-A 19521500 als Ausgangsstoffe a), b), c) und d) genannten Verbindungen.

Der Ausdruck "(potentiell) hydrophile Gruppen" faßt für die Ausgangsstoffe c) hydrophile Gruppen und potentiell hydrophile Gruppen zusammen, wobei unter "potentiell hydrophilen Gruppen" nichtionische und bevorzugt ionische Gruppen verstanden werden, die unschwierig (wie durch Neutralisation oder Salzbildung) in hydrophile Gruppen überführbar sind. Die (potentiell) hydrophilen Gruppen der Ausgangsstoffe c) reagieren dabei deutlich langsamer mit Isocyanatgruppen als die zum Aufbau der Molekülhauptkette dienenden funktionellen Gruppen der Ausgangsstoffe c). Der Anteil der Komponenten mit (potentiell) hydrophilen Gruppen wird dabei allgemein so bemessen, daß die Molmenge der (potentiell) hydrophilen Gruppen, bezogen auf die Gesamtmenge der Ausgangsstoffe a) bis e), 80 bis 1200, bevorzugt 140 bis 1000 und besonders bevorzugt 200 bis 800 mmol/kg beträgt. Dabei wird von den (potentiell) hydrophilen Gruppen bevorzugt der Gehalt an nichtionischen hydrophilen Gruppen für die Ausgangsstoffe c) bei 0 bis 5, bevorzugt bei 0-3 und besonders bevorzugt bei 0 bis 1 Gew.% der Gewichtsmenge der Ausgangsstoffe a) bis e) gehalten. In der bevorzugten Ausführungs-form enthalten die Ausgangsstoffe für die Herstellung der Polyurethane (A) keine C-C-Doppelbindungen, das Polyurethan (A) ist allgemein im wesentlichen frei von C-C-Doppelbindungen.

Die verwendeten Ausgangsstoffe a) bis e) tragen im arithmetischen Mittel üblicherweise 1,5 bis 2,5, bevorzugt 1,9 bis 2,1 und besonders bevorzugt 2,0 Isocyanatgruppen bzw. funktionelle Gruppen, die mit Isocyanaten in einer Additionsreaktion reagieren können. Die Polyadditionsreaktion erfolgt im allgemeinen bei 20 bis 180 °C, bevorzugt 50 bis 150 °C unter Normaldruck oder autogenem Druck, wobei zur Beschleunigung übliche Katalysatoren dafür mitverwendet werden können, wie Zinn(II)octoat, Dibutylzinndilaurat oder Diazabicyclo-(2,2,2)-octan.

Als Lösungsmittel sind dafür wassermischbare Lösungsmittel mit einem Siedepunkt bei Normaldruck von 40 bis 100 °C geeignet, die nicht oder sehr langsam mit den Ausgangsstoffen oder evtl. Zwischenprodukten bei der Polyurethanherstellung reagieren. Die Lösungsmittel werden zumindest überwiegend aus der Dispersion entfernt, insbesondere bei Unterdruck, so daß die Dispersionen dann frei von Lösungsmitteln sind.

Die Herstellung der Dispersionen kann, wie in der DE-A 19716020 angegeben, insbesondere nach dem sogen. "Acetonverfahren" oder dem "Polyurethanpräpolymer-Mischverfahren" erfolgen, wobei für die Herstellung der erfindungsgemäßen wässrigen Dispersionen der Polyurethane (A) und (Meth)acrylat-Präpolymeren (B) das "Polyurethanpräpolymer-Mischverfahren" bevorzugt ist. Beim "Acetonverfahren" wird in einem mit Wasser mischbaren und bei Normaldruck unter 100 °C siedenden organischen Lösungsmittel aus den Ausgangsstoffen a) bis e) ein ionisches Polyurethan hergestellt. Bevorzugt nach Zugabe des (Meth)acrylat-Präpolymeren (B) wird dann nach der Neutralisation des Produktes, was mit Natron- oder Kalilauge erfolgen kann, bis zur Bildung einer Dispersion mit einer kohärenten wässrigen Phase Wasser zugegeben. Beim "Polyurethanpräpolymer-Mischverfahren" wird nicht in einem Schritt ein ausreagiertes (potentiell) ionisches Polyurethan, sondern im ersten Schritt nur ein isocyanatgruppenhaltiges Polyurethanpräpolymeres (A') hergestellt. Vor oder nachdem dieses Polyurethanpräpolymer (A') nach der Neutralisation in Wasser dispergiert wird, bevorzugt davor, kann das (Meth)acrylat-Präpolymer (B), bevorzugt lösungsmittelfrei, dem Polyurethan-Präpolymer (A') bzw. ausreagierten Polyurethan zugemischt werden. Beim oder nach dem Dispergieren wird das Isocyanatgruppen enthaltende Polyurethanpräpolymere (A') durch Zugabe von Aminen vernetzt oder kettenverlängert oder man läßt im Wasser die Isocyanatgruppen im Wasser zu Amingruppen hydrolysieren, die dann mit noch vorhandenen Isocyanatgruppen abreagieren. Das Präpolymere (B) kann aber auch erst kurz vor Verwendung einer dispergierten Mischung (A+B) in das dispergierte Polyurethan (A) eingerührt werden. Die erfindungsgemäßen wäßrigen Dispersionen haben im allgemeinen einen Festanteil von 20 bis 70, insbesondere 35 bis 60 und bevorzugt von 35 bis 45 Gew.%. Sie sind im wesentlichen frei von Schutzkolloiden und/oder Emulgatoren. Die wässrigen Dispersionen sind mit anderen Dispersionen gut mischbar.

Die erfindungsgemäßen wässrigen Dispersionen der Mischungen der Polyurethane (A) und der (Meth)acrylat-Präpolymere (B) eignen sich ganz besonders zum Imprägnieren oder Beschichten von Papiersubstraten wie von Dekorpapieren. Wie in den nachfolgenden Beispielen gezeigt wird, weisen sie beim Imprägnieren von handelsüblichem Dekorpapier eine überraschend kurze Penetrationszeit und hohe Kunststoffaufnahme auf und geben den Papieren eine hohe Spaltfestigkeit.

Das Beschichten und Imprägnieren des Papiersubstrats wird in herkömmlicher Weise erreicht, indem man das Papiersubstrat mit den wässrigen Dispersionen der Polyurethane (A) und den (Meth)acrylat-Präpolymeren (B) behandelt. Das so behandelte Papier wird im Allgemeinen dann mit energiereicher Strahlung (Strahlungshärtung), z. B. UV-Strahlung oder Elektronenstrahlen, bevorzugt mit UV-Strahlung mit einer Wellenlänge im Bereich von 200 bis 450 nm, bevorzugt 220 bis 390 nm, behandelt. Dadurch werden die (Meth)acrylat-Präpolymere vernetzt, wodurch die Härtung der Kunstoffe, die von dem Papiersubstrat absorbiert sind bewirkt wird. Zum Zwecke der Lichthärtung kann die wässrige Dispersion herkömmliche Photoinitiatoren, wie aromatische Ketonverbindungen, z. B. Benzophenone, Alkylbenzophenone, Michelers Keton, Anthron, halogenierte Benzophenone, 2,4,6-Trimethylbenzoylphosphinoxid, Phenylglyoxylester, Anthrachinon und seine Derivate, Benzilketale, Hydroxyalkylphenone etc., oder Gemische dieser Verbindungen enthalten. Die Menge an Photoinitiatoren beträgt im Allgemeinen von 0,01 bis 20 Gew.-%, bezogen auf die Komponente B.

Die nachstehenden Beispiele und der Vergleichsversuch sollen die Erfindung weiter erläutern, aber nicht beschränken. Soweit nicht besonders anders angegeben, beziehen sich Teile und Prozente auf das Gewicht. Angegebene Viskositäten (mPa.s) wurden bei 23 °C gemäß DIN EN ISO 3219 bei einem Geschwindigkeitsgefälle D= 250 s⁻¹ ermittelt. Die angegebenen Teilchengrößen wurden mit Hilfe der Photonenkorrelationsspektroskopie (Coulter N4/MD) analysiert.

### Beispiel 1

125,9 Teile eines Polyesterdiols aus gleichmolaren Mengen von Adipinsäure und Isophthalsäure sowie Hexandiol-1,6 mit einem Molekulargewicht von 2000, 28,28 Teile Dimethylol-propionsäure, 37,12 Teile Ethylenglykol und 157,3 Teile eines handelsüblichen Isomerengemischs von Toluylendiisocyanat (ca. 80% 2,4- und 20 % 2,6-Isomeres) wurden 4,5 Stunden bei 80 °C in 202 Teilen Methylethylketon umgesetzt. Danach wurde die Polyurethanpräpolymer-Lösung mit 246 Teilen Aceton verdünnt und auf 50 °C gekühlt. Der Isocyanatgehalt des Polyurethanpräpolymeren betrug zu diesem Zeitpunkt 0,30%. 119 Teile Laromer® LR 8982 (niedrigviskoses modifiziertes Polyetheracrylat, Viskosität 200-350 mPa.s, Wasserverdünnbarkeit 20,4%) wurden zugegeben und 10 Minuten eingerührt. Danach wurden 25,3 Teile einer 25 %igen wässrigen Natronlauge und sogleich danach 714 Teile VE-Wasser zugegeben. Anschließend wurde das Lösungsmittel abdestilliert. Es entstand eine durchscheinende wässrige Dispersion mit einem Festanteil von 39,7, einem pH-Wert von 6,60, einer Teilchengröße von 38,2 nm und einer Viskosität von 29 mPa.s.

Mit der so hergestellten Dispersion wurde eine 25%ige Dispersionsflotte hergestellt und mit dieser handelsübliches Dekorpapier (Fa.Kämmerer) imprägniert (2 bar Liniendruck, Warenlauf: 2 m/Minute, Dispersionsflotte: 25%). Es wurde die prozentuale Kunstoffaufnahme des Papiers nach dem Imprägnieren bestimmt sowie als Penetrationszeit die Zeit, die das Dekorpapier braucht, um vollständig von einer 25 %igen Dispersionsflotte imprägniert zu werden. Die Ergebnisse der Bestimmungen zeigt Tabelle 1.

### Beispiel 2

Es wurde wie in Beispiel 1 verfahren, jedoch wurden 221,9 Teile Laromer® LR 8982 und 27,4 Teile einer 25 %igen wäßrigen Natronlauge zugegeben. Wie in Beispiel 1 angegeben, wurde mit einer 25 %igen Dispersionsflotte die prozentuale Kunststoffaufnahme im Dekorpapier sowie die Penetrationszeit ermittelt. Die Ergebnisse zeigt Tabelle 1.

### Beispiel 3

Es wurde wie in Beispiel 1 verfahren, jedoch wurden als (Meth)acrylat-Präpolymer 110,9 Teile Laromer®LR 8982 sowie 110,9 Teile Laromer® PO43F (Polyetheracrylat, Wasserverdünnbarkeit unter 3 %) verwendet. Es wurde mit 27,4 Teilen einer 25 %igen wässrigen Natronlauge neutralisiert. Wie in Beispiel 1 angegeben, wurde mit einer 25 %igen Dispersionsflotte die prozentuale Kunststoffaufnahme im Dekorpapier sowie die Penetrationzeit ermittelt. Die Ergebnisse zeigt Tabelle 1.

### Beispiel 4 (Vergleich)

269,7 Teile des in Beispiel 1 angegebenen Polyesterdiols mit einem Molekulargewicht von 2000, 60,6 Teile Dimethylolpropionsäure, 79,5 Teile Ethylenglykol und 337 Teile des in Beispiel 1 angegebenen Toluylendiisocyant-Isornerengemischs wurden in 430 Teilen Methylethylketon bei 80 °C während 4,5 Stunden umgesetzt. Danach wurde die Polyurethanpräpolymer-Lösung mit 246 Teilen Aceton verdünnt und auf 50 °C abgekühlt. Das Polyurethanpräpolymer hat zu diesem Zeitpunkt einen Isocyanatgehalt von 0,3 %. Dann wurden 253,5 Teile Laromer® PO43F (Polyetheracrylat, Wasserverdünnbarkeit unter 3%) zugegeben und 10 Minuten lang eingerührt. Nach der Zugabe von 54,3 Teilen einer 25 %igen wässrigen Natronlauge wurden sofort 1494 Teile VE-Wasser zugemischt. Danach wurde das Lösungsmittel abdestilliert. Es entstand eine durchscheinende wässrige Dispersion mit einem Festanteil von 39 %, einem pH-Wert von 7,43, einer Teilchengröße von 44,2 nm und einer Viskosität von 65mPa.s. Wie in Beispiel 1 angegeben, wurde mit einer 25 %igen Dispersionsflotte die Kunststoffaufnahme in Dekorpapier sowie die Penetrationszeit ermittelt. Die Ergebnisse zeigt Tabelle 1.

**Tabelle 1**

| Penetrationszeiten und prozentuale Kunststoffaufnahme von 25%igen Flotten von Dispersionen gemäß den Beispielen 1-4 | | | | |
|---|---|---|---|---|
| Beispiel | 1 | 2 | 3 | 4(Vgl.) |
| Penetrationszeit (Sek.) | 1 | 2 | 2 | 14 |
| % Kunststoffaufnahme nach Imprägnieren | 25,0 | 23,8 | 23,6 | 16,6 |

## Patentansprüche

1. Wässrige Dispersionen, die im wesentlichen frei von Schutzkolloiden und Emulgatoren sind und enthalten:
a) Polyurethane (A) mit hydrophilen Gruppen, die eine Wasserdispergierbarkeit des Polyurethans bewirken, wobei das Polyurethan (A) im wesentlichen frei ist von C-C-Doppelbindungen, und
b) (Meth)acrylat-Präpolymere (B) mit einem Gehalt von 0,1 bis 1 mol radikalisch polymerisierbaren C-C-Doppelbindungen pro 100 g Präpolymer,
**dadurch gekennzeichnet, daß** die (Meth)acrylat-Präpolymeren (B) eine Wasserverdünnbarkeit von mindestens 5 Gew.% Wasser, bezogen auf den Festanteil der (Meth)acrylat-Präpolymeren (B), aufweisen.

2. Wässrige Dispersionen gemäß Anspruch 1, **dadurch gekennzeichnet, daß** die (Meth)acrylat-Präpolymeren (B) eine Wasserverdünnbarkeit von 5 bis 100 Gew.% Wasser, bezogen auf den Festanteil der (Meth)acrylat-Präpolymeren (B), aufweisen.

3. Wässrige Dispersionen gemäß Anspruch 1 oder 2, **dadurch gekennzeichnet, daß** die (Meth)acrylat-Präpolymeren (B) eine Wasserverdünnbarkeit von 20 bis 50 Gew.% Wasser, bezogen auf den Festanteil der (Meth)acrylat-Präpolymeren (B), aufweisen.

4. Wässrige Dispersionen gemäß einem der Ansprüche 1 bis 3, **dadurch gekennzeichnet, daß** die (Meth)acrylat-Präpolymeren (B) hydrophile Gruppen enthaltende Polyetheracrylate sind.

5. Wässrige Dispersionen nach einem der Ansprüche 1 bis 4, **dadurch gekennzeichnet, daß** die (Meth)acrylat-Präpolymeren (B) Hydroxylgruppen und -CH₂-CH₂-O-Struktureinheiten enthaltende Polyetheracrylate darstellen.

6. Wässrige Dispersionen nach einem der Ansprüche 1 bis 5, **dadurch gekennzeichnet, daß** das Gewichtsverhältnis Polyurethan (A) zu (Meth)acrylat-Präpolymer (B) 0,3 : 1 bis 10 : 1 beträgt.

7. Wässrige Dispersionen nach einem der Ansprüche 1 bis 6, **dadurch gekennzeichnet, daß** das Polyurethan (A) aufgebaut ist aus
a) Diisocyanaten mit 4 bis 30 C-Atomen,
b) Diolen, von denen
b1) 10 bis 100 mol-% der Diole b1)+b2) ein Molekulargewicht von 500 bis 5000 g/mol aufweisen, und
b2) 0 bis 90 mol-% der Diole b1)+b2) ein Molekulargewicht von 60 bis 500 g/mol aufweisen,
c) von den Verbindungen a) und b) verschiedene Verbindungen mit mindestens einer Isocyanatgruppe oder einer mit Isocyanatgruppen reagierenden Gruppe, die zusätzlich mindestens eine hydrophile oder potentiell hydrophile Gruppe enthalten, die die Wasserdispergierbarkeit der Polyurethane bewirkt,
d) ggf. weitere, von den Verbindungen a) bis c) unterschiedliche mehrwertige Verbindungen mit reaktiven alkoholischen Hydroxylgruppen, primären und/oder sekundären Aminogruppen oder Isocyanatgruppen, und
e) ggf. weitere, von den Verbindungen a) bis d) unterschiedliche einwertige Verbindungen mit mindestens einer reaktiven alkoholischen Hydroxylgruppe, primären und/oder sekundären Aminogruppe oder Isocyanatgruppe.

8. Verwendung der wässrigen Dispersionen gemäß einem der Ansprüche 1 bis 7 zum Beschichten oder Imprägnieren von strahlungshärtbaren Papiersubstraten.

## Claims

1. An aqueous dispersion which is essentially free of protective colloids and emulsifiers and contains:
a) polyurethanes (A) having hydrophilic groups which result in water dispersibility of the polyurethane, the polyurethane (A) being essentially free of C-C double bonds, and
b) (meth)acrylate prepolymers (B) containing from 0.1 to 1 mol of C-C double bonds capable of free radical polymerization per 100 g of prepolymer,
wherein the (meth)acrylate prepolymers (B) have a water dilutability of at least 5% by weight, based on the solids content of the (meth)acrylate prepolymers (B), of water.

2. An aqueous dispersion as claimed in claim 1, wherein the (meth)acrylate prepolymers (B) have a water dilutability of from 5 to 100% by weight, based on the solids content of the (meth)acrylate prepolymers (B), of water.

3. An aqueous dispersion as claimed in claim 1 or 2, wherein the (meth)acrylate prepolymers (B) have a water dilutability of from 20 to 50% by weight, based on the solids content of the (meth)acrylate prepolymers (B), of water.

4. An aqueous dispersion as claimed in any of claims 1 to 3, wherein the (meth)acrylate prepolymers (B) are polyether acrylates containing hydrophilic groups.

5. An aqueous dispersion as claimed in any of claims 1 to 4, wherein the (meth)acrylate prepolymers (B) are polyether acrylates containing hydroxyl groups and -CH₂-CH₂-O structural units.

6. An aqueous dispersion as claimed in any of claims 1 to 5, wherein the weight ratio of polyurethane (A) to (meth)acrylate prepolymer (B) is from 0.3 : 1 to 10 : 1.

7. An aqueous dispersion as claimed in any of claims 1 to 6, wherein the polyurethane (A) is composed of
a) diisocyanates of 4 to 30 carbon atoms,
b) diols, of which
b1) from 10 to 100 mol% of the diols b1)+b2) have a molecular weight of from 500 to 5000 g/mol and
b2) from 0 to 90 mol% of the diols b)+b2) have a molecular weight of from 60 to 500 g/mol,
c) compounds which differ from the compounds a) and b) and have at least one isocyanate group or one group reacting with isocyanate groups, which additionally contain at least one hydrophilic or potentially hydrophilic group and impart water dispersibility to the polyurethanes,
d) if required, further polyfunctional compounds differing from the compounds a) to c) and having reactive alcoholic hydroxyl groups, primary and/or secondary amino groups or isocyanate groups and
e) if required, further monofunctional compounds differing from the compounds a) to d) and having at least one reactive alcoholic hydroxyl group, primary and/or secondary amino group or isocyanate group.

8. The use of an aqueous dispersion as claimed in any of claims 1 to 7 for coating or impregnating radiation-curable paper substrates.

## Revendications

1. Dispersions aqueuses, qui sont sensiblement exemptes de colloïdes de protection et d'agents émulsionnants et qui contiennent :
a) des polyuréthannes (A) à groupes hydrophiles qui ont pour effet une capacité de dispersion dans l'eau du polyuréthanne, le polyuréthanne (A) étant sensiblement exempt de doubles liaisons C-C, et
b) des prépolymères (méth)acryliques (B) ayant une teneur de 0,1 à 1 mole de doubles liaisons C-C polymérisables par voie radicalaire par 100 g de prépolymère,
**caractérisées en ce que** les prépolymères (méth)acryliques (B) présentent une capacité de dilution dans l'eau d'au moins 5% en poids d'eau, par rapport à la fraction solide des prépolymères (méth)acryliques (B).

2. Dispersions aqueuses suivant la revendication 1, **caractérisées en ce que** les prépolymères (méth)acryliques (B) présentent une capacité de dilution dans l'eau de 5 à 100% en poids d'eau, par rapport à la fraction solide des prépolymères (méth)acryliques (B).

3. Dispersions aqueuses suivant l'une des revendications 1 et 2, **caractérisées en ce que** les prépolymères (méth)acryliques (B) présentent une capacité de dilution dans l'eau de 20 à 50% en poids d'eau, par rapport à la fraction solide des prépolymères (méth)acryliques (B).

4. Dispersions aqueuses suivant l'une des revendications 1 à 3, **caractérisées en ce que** les prépolymères (méth)acryliques (B) sont des polyétheracrylates contenant des groupes hydrophiles.

5. Dispersions aqueuses suivant l'une des revendications 1 à 4, **caractérisées en ce que** les prépolymères (méth) acryliques (B) sont des polyétheracrylates contenant des groupes hydroxyle et des unités structurelles -CH₂-CH₂-O-.

6. Dispersions aqueuses suivant l'une des revendications 1 à 5, **caractérisées en ce que** le rapport pondéral entre polyuréthanne (A) et prépolymère (méth)acrylique (B) est de 0,3/1 à 10/1.

7. Dispersions aqueuses suivant l'une des revendications 1 à 6, **caractérisées en ce que** le polyuréthanne (A) est synthétisé à partir
a) de diisocyanates comportant 4 à 30 atomes de C,
b) de diols, dont
b1) 10 à 100 moles % des diols b1)+b2) présentent un poids moléculaire de 500 à 5000 g/mole, et
b2) 0 à 90 moles % des diols b1)+b2) présentent un poids moléculaire de 60 à 500 g/mole,
c) de composés différents des composés a) et b) qui comportent au moins un groupe isocyanate ou un groupe réagissant avec des groupes isocyanate, et qui contiennent en supplément au moins un groupe hydrophile ou potentiellement hydrophile, qui a pour effet la capacité de dispersion dans l'eau des polyuréthannes,
d) éventuellement d'autres composés à plusieurs valences polyvalents, différents des composés a) à c), qui comportent des groupes hydroxyle alcooliques réactifs, des groupes amino primaires et/ou secondaires ou des groupes isocyanate, et
e) éventuellement d'autres composés monovalents, différents des composés a) à d), qui comportent au moins un groupe hydroxyle alcoolique réactif, un groupe amino primaire et/ou secondaire ou un groupe isocyanate.

8. Utilisation des dispersions aqueuses suivant l'une des revendications 1 à 7, pour enduire ou imprégner des substrats en papier durcissables par irradiation.
